# EUROPEAN PATENT SPECIFICATION

(11) **EP 3 842 670 B1**
(45) Date of publication and mention of the grant of the patent: **22.11.2023**
(21) Application number: 20000486.9
(22) Date of filing: 23.12.2020
(51) Int. Cl.: F16J 15/18, F16J 15/34, F16J 15/44

(54) **SEALING RING AND COMPRESSOR WITH SUCH SEALING RING**
DICHTUNGSRING UND KOMPRESSOR MIT EINEM SOLCHEN DICHTUNGSRING
BAGUE D'ÉTANCHÉITÉ ET COMPRESSEUR AVEC UNE TELLE BAGUE D'ÉTANCHÉITÉ

(30) Priority: 23.12.2019 IT 201900025354
(43) Date of publication of application: 30.06.2021
(73) Proprietor: Caast Società per Azioni, 22066 Mariano Comense, (CO) (IT)
(72) Inventor: CAPPELLINI, Andrea, 22066 Mariano Comense CO (IT)
(74) Representative: Perani & Partners S.p.A.

(56) References cited:
- US-A- 2 055 153
- US-A- 4 025 079
- US-A1- 2009 020 959

## Description

### Field of the invention

The present invention relates to a modular sealing ring. The sealing ring according to the present invention can be advantageously employed in various fields in large pumps or compressors, such as methane compressors, or more.

The present invention also relates to a compressor having such sealing ring.

### Discussion of the related art

A sealing ring comprising an annular body with two open ends is known in the art. These ends are spaced apart in the circumferential direction and can be moved away from or toward each other in the circumferential direction to increase or decrease the size of the ring in the radial direction. Thus, the sealing ring can be temporarily tightened or loosened to be inserted by an operator into a seat for its intended use. Such sealing ring also comprises elastic members peripherally arranged around the annular body which restore the shape of the annular body once it has been positioned.

US 4025079A discloses a member applied to suspension bearings used to support part of the weight of a driving electric traction motor on an axle of a locomotive. The member is in the form of a ring and has biasing member such as a coiled tension spring. The member rotates with a journal in a recessed groove formed in the bearing.

US 2009/020959A1 discloses a segmented packing ring used to seal reciprocating piston rods of reciprocating piston engines such as internal combustion engines, compressors and pumps. US patent discloses a packing ring which comprises at least two annular segments held together in circumferential direction by means of springs in the assembled state. At each contact point of adjacent annular segments there is at least one separate tension spring arranged between anchor elements provided on both sides of the annular segments.

US 2055153A discloses a packing ring for piston engines, composed of two complete rings each divided in sectors. The joints in one ring are displaced in relation to the joints in the other component ring. press springs are fastened between the sectors in small cavities.

### Prior art problem

Inconveniently, these sealing rings are not easily seated by the operator. Furthermore, these types of sealing rings tend to loosen and fall out of their seat, thereby failing to ensure their sealing function.

### SUMMARY OFTHE INVENTION

Therefore, the purpose of the present invention is to provide a sealing ring that can obviate the aforementioned prior art drawbacks.

In particular, an object of the present invention is to provide a sealing ring that can be properly and easily positioned by the user.

A further object of the present invention is to provide a sealing ring that remains in place over time.

Another object of the present invention is to provide a compressor having such sealing ring.

The aforementioned technical purpose and objects are substantially fulfilled by a sealing ring that comprises the technical features as disclosed in one or more of the accompanying claims.

### Advantages of the Invention

The present invention provides a sealing ring that can be easily inserted into its seat for use and that remains in place.

### BRIEF DESCRIPTION OF THE DRA WINGS

The characteristics and advantages of the present invention will result from the following detailed description of a possible practical embodiment, illustrated as a non-limiting example in the annexed drawings, in which:
- Figure 1 shows a perspective view of a first embodiment of a sealing ring of the present invention;
- Figure 2 shows a detail of the sealing ring of Figure 1;
- Figure 3 is a perspective view of a detail of a second embodiment of a sealing ring of the present invention;
- Figure 4 shows a face view of a detail of a sealing ring of the present invention;
- Figure 5 shows an exploded perspective view of a detail of a third embodiment of a sealing ring of the present invention;

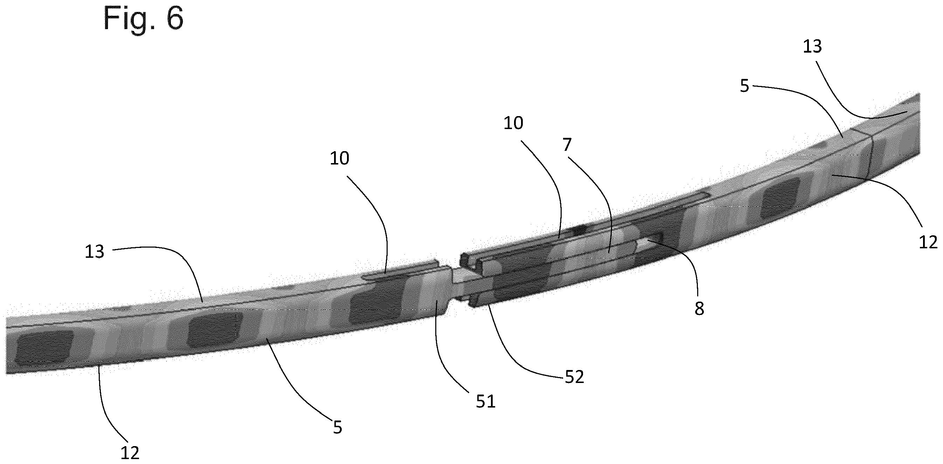

- Figure 6 shows a strain distribution according to finite element analysis modeling of a detail of the sealing ring of Figure 4 with certain parts omitted,
- Figure 7 shows a schematic view of a compressor having the sealing ring of the present invention.

### DETAILED DESCRIPTION

Even when this is not expressly stated, the individual features as described with reference to the particular embodiments shall be intended as auxiliary to and/or interchangeable with other features described with reference to other exemplary embodiments.

Referring to the accompanying drawings, the present invention relates to a sealing ring 1. The sealing ring 1 of the present invention is configured to provide a gas seal inside a compressor 20, preferably a multi-stage compressor, between a suction zone 21 and a delivery zone 22, in which substantial pressure differences are present. That is, in operation the suction zone 21 is usually at low pressure, i.e. atmospheric pressure. On the other hand, the delivery zone 22 is usually at high pressure, generally from 50 to 70 bar. Furthermore, temperature differences ranging from 100°C to 150°C may be provided between the two zones with minimum temperature Tmin and maximum temperature Tmax.

In particular, the sealing ring 1 is configured to provide a sealing effect between the two zones and is arranged in a suitable seat 23 of the compressor 20, interposed between the suction zone 21 and the delivery zone 22.

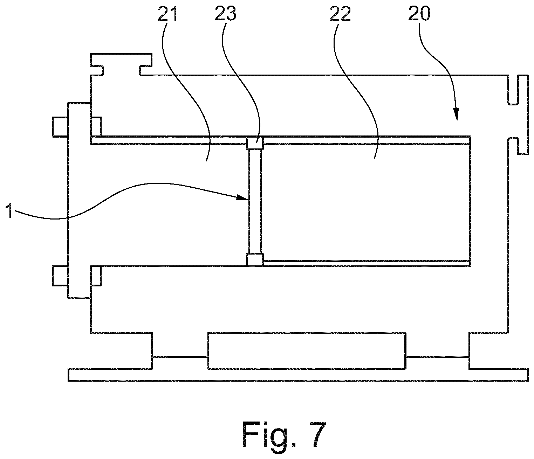

The present invention also relates to a compressor 20, as schematically shown in Figure 7, in which the compressor 20 comprises, as mentioned above, a suction zone 21; a delivery zone 22 and a seat 23 in which the sealing ring 1 is received to provide a sealing effect between the suction zone 21 and the delivery zone 22.

The sealing ring 1 of the present invention has an inside diameter ranging from 0.5 to 5 m. Preferably, the sealing ring 1 has an inside diameter ranging from 1 to 3 m.

Preferably, the sealing ring 1 has a polygonal cross-section. Preferably, the sealing ring 1 has a first dimension ranging from 15 to 25 cm, more preferably of 17.5 cm. Preferably, the sealing ring has a second dimension ranging from 8 to 12 cm, more preferably from 10 to 11 cm.

Accordingly, the seat 23 has an inside diameter ranging from 0.5 to 5 m. Preferably, the seat 23 has an inside diameter ranging from 1 to 3 m.

Preferably, the seat 23 also has a rectangular cross-section. Preferably, the seat 23 has a first dimension ranging from 15 to 25 cm, more preferably of 18 cm. Preferably, the seat 23 has a second dimension ranging from 8 to 12 cm.

The sealing ring 1 comprises an annular body 2 having a circumferential profile 3. The sealing ring 1 also comprises elastic members 4. These elastic members 4 are peripherally connected to the annular body 2. In particular, the elastic members 4 are configured to counteract an expansion or a contraction of the annular body 2 in the radial direction. For example, the elastic members 4 are configured to loosen/tighten the sealing ring 1 to fit it into the seat 23 in which the sealing ring 1 is intended to perform its function. The elastic members 4 are configured to counteract expansions or contractions of the annular body 2 also in the circumferential direction following strains endured by the sealing ring 1. These strains are caused, for example, by mechanical and/or thermal stresses endured by the sealing ring 1 during operation.

More in detail, the annular body 2 comprises two or more sealing elements 5. These sealing elements 5 define the circumferential profile 3 of the annular body 2. In particular, the sealing elements 5 extend along circumferential sections and are adjacent to each other. It should be noted that, according to the present invention, each sealing element 5 partially overlaps the sealing element 5 adjacent thereto.

Each sealing element 5 extends between two opposite ends 51, 52. Preferably, each sealing element 5 partially overlaps the sealing element 5 adjacent thereto at least at one end 51, 52. Furthermore, preferably, each sealing element 5 contacts the sealing element 5 adjacent thereto in at least at one end 51, 52.

It should be noted that each sealing element 5 is configured to slide in the circumferential direction relative to the adjacent sealing element 5 at the respective end 51, 52. For example, the sliding movement of each sealing element 5 causes an expansion or a contraction in the radial direction of the annular body 2. Advantageously, the sealing ring 1 can easily fit into its respective seat 23 during assembly.

Each sealing element 5 has an inner surface 11. The inner surfaces 11 of the sealing elements 5 that make up the annular body 2 define the inner circumferential profile of the annular body 2. Each sealing element 5 also has an outer surface 12. The outer surfaces 12 of the sealing elements 5 define the outer circumferential profile of the annular body 2. Each sealing element 5 also has two opposite lateral surfaces 13, connecting the inner surface 11 and the outer surface 12.

Preferably, each end 51, 52 has a sliding surface 9 extending in the circumferential direction. In particular, the respective sliding surfaces 9 of two adjacent sealing elements 5 face and contact each other. The sliding surfaces 9 are also oriented in the same direction as the lateral surfaces 13.

In the sealing ring 1 of the present invention, each elastic member 4 bridges between two ends 51, 52 of two adjacent sealing elements 5. In other words, each elastic member 4 is shared by two separate and adjacent sealing elements 5. Thus, two adjacent sealing elements 5 are constrained to each other. Preferably, each elastic member 4 is fixed to each of the two adjacent sealing elements 5 by means of fastening elements 6. As a result, the movement of a sealing element 5 also causes the movement of the other sealing elements 5. In other words, when a sealing element 5 slides relative to another sealing element 5, either moved by an operator or as a result of deformation, the respective elastic elements 4 connected thereto compress or expand, thereby also acting on the adjacent sealing element 5 and so on.

The overlapping ends 51, 52 of two adjacent sealing elements 5 have complementary shapes. In other words, two ends 51, 52 of two adjacent sealing elements 5 have matching shapes. Advantageously, when a sealing element 5 slides relative to and toward the adjacent sealing element 5, the respective ends 51, 52 move toward each other until they join.

According to a first preferred embodiment, each sealing element 5 comprises a projecting portion 7 extending along a circumferential direction. The projecting portion 7 of each sealing element 5 is configured to couple with the projecting portion 7 of the sealing element 5 adjacent thereto. According to this embodiment, the projecting portion 7 has the sliding surface 9. Preferably, each end 51, 52 comprises an abutment portion 14. The abutment portion 14 is configured to abut the projecting portion 7 of the adjacent sealing element 5 to stop sliding thereof. For example, each end 51, 52 comprises a first L-shaped profile and a second inverted L-shaped profile. In particular, the projecting portion 7 is embodied by the short section of the L shape, whereas the abutment portion 14 is embodied by the upper end of the long portion of the L shape.

According to a second preferred embodiment, as an alternative to the previous embodiment, each sealing element 5 comprises a projecting portion 7 at one end 51. This projecting portion 7 extends along a circumferential direction. Each sealing element 5 further comprises a recess 8 at the opposite end 52. This recess 8 also extends along a circumferential direction. In particular, the projecting portion 7 of each sealing element 5 is configured to form a male-female coupling with the recess 8 of the sealing element 5 adjacent thereto. The recess 8 comprises a bottom 81 to abut the projecting portion 7 of the adjacent sealing element 5 to stop sliding thereof. For example, each end comprises a first T-shaped profile and a second U-shaped profile. In particular, the projecting element 7 is embodied by the lower section of the T shape, which is received by the recess 8 represented by the cavity defined by U shape.

According to a preferred embodiment, the elastic members 4 comprise a pair of springs 41 for each sealing element 5. In particular, the number of springs 41 is twice the number of the sealing elements 5. According to this embodiment, the springs 41 are located on opposite sides of the annular body 2. In particular, the term "opposite sides" means two opposite surfaces of the annular body 2, i.e. of the sealing elements 5. The springs 41 are placed each on a respective lateral surface 13 of the sealing elements 5. Accordingly, each pair of ends 51, 52 of two adjacent sealing elements 5 comprises two springs 41. In other words, each sealing element 5 shares two springs 41 with each adjacent sealing element 5.

Each spring 41 is fixed to two contiguous sealing elements 5 and is pretensioned in rest conditions. Also, each spring 41 is configured to remain in a pretensioned state at the maximum temperature Tmax, in which the sealing elements 5 expand circumferentially, thereby reducing the distance between the ends 51, 52 of the sealing elements 5, and not to yield at the minimum temperature Tmin, in which the sealing elements 5 circumferentially retract, thereby increasing the distance between the ends 51, 52 of the sealing elements 5.

Preferably, each end 51, 52 comprises a groove 10. The respective grooves 10 of two adjacent sealing elements 5 are configured to accommodate a respective portion of an elastic member 4. Preferably, the groove 10 is formed on a lateral surface 13. According to the embodiment in which the elastic members 4 comprise a pair of springs 41, each end 51, 52 comprises two grooves 10. In particular, each groove 10 is formed on a respective lateral surface 13 of each end 51, 52 of each sealing element 5.

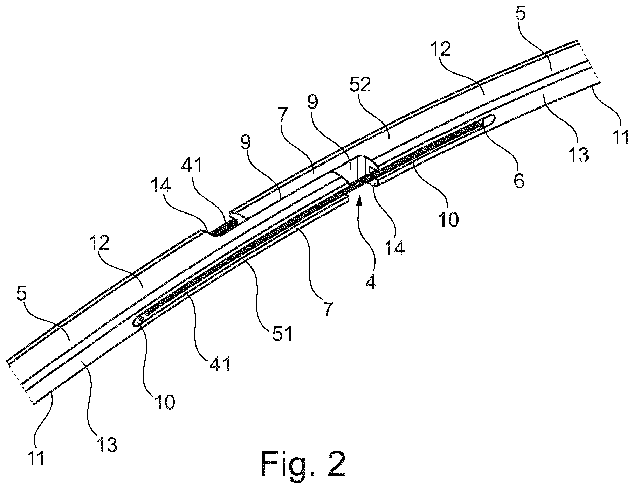

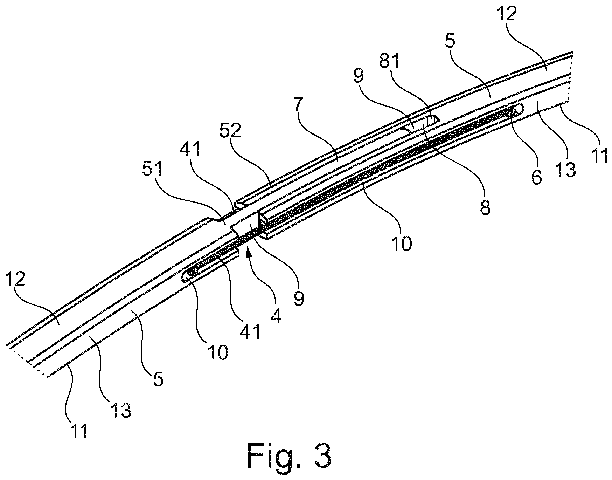

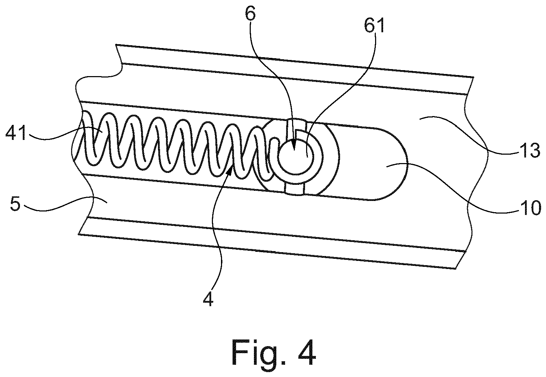

Particularly referring to Figures 2, 3 and 4, the fastening elements 6 comprise a threaded screw 61. The threaded screw 61 is configured to be screwed with the respective sealing element 5 at its respective groove 10. According to this embodiment, the groove 10 has an internally threaded portion (not shown) which is shaped to receive the threaded screw 61.

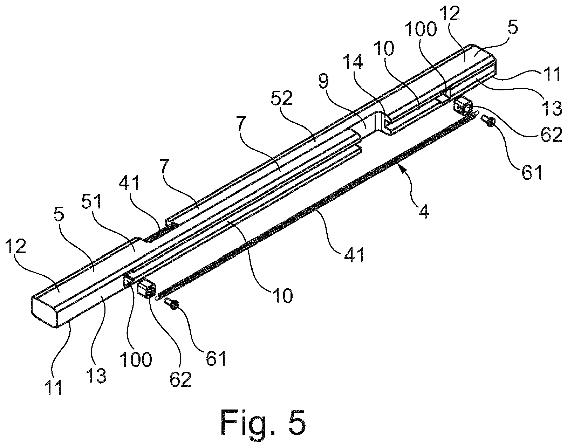

Alternatively, particularly referring to Figure 5, the fastening means 6 comprise the screw 61 and an internally threaded bush 62, preferably made of PTFE or PEEK. The bush 62 is shaped to receive the threaded screw 61. The internally threaded bush 62 is located inside a housing 100 formed in the groove 10 and preferably shaped to create a form fit with the bush 62.

According to a preferred embodiment, the sealing elements 5 are made of polytetrafluoroethylene.

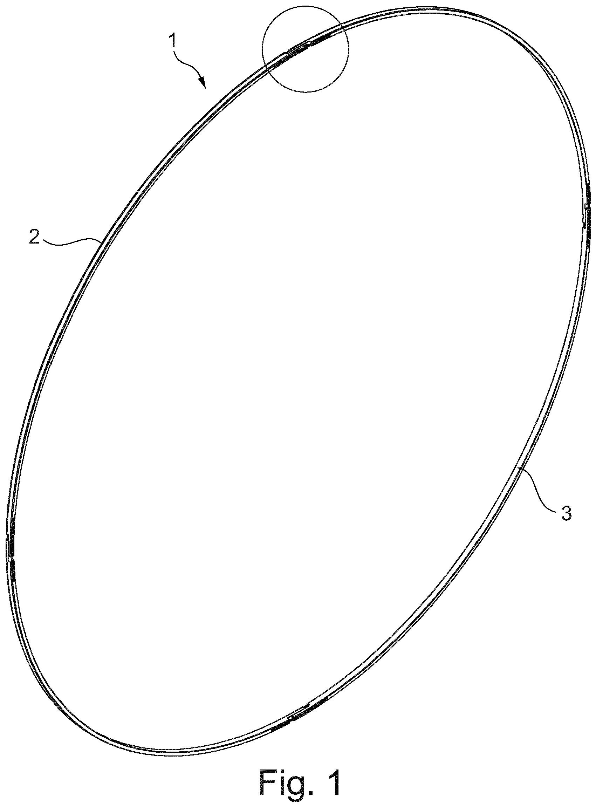

Preferably, these sealing elements 5 have the same size. This will provide a fair distribution of both thermal and mechanical loads applied to each element. Advantageously, the structural integrity of the entire sealing ring 1 is preserved over time. Advantageously, the durability of the sealing ring 1 increases. Particularly referring to Figure 5, the strain distribution on the sealing ring 1 is shown in grayscale, according to a finite element analysis simulation. It will be appreciated in this respect that the figure shows the result of a simulation, therefore the numerical indices, given for easier reading of the model, shall be intended with reference to Figures 1-4. In particular, it should be noted a homogeneous strain distribution is achieved on the various portions of the individual sealing elements 5.

According to a preferred embodiment, the sealing ring 1 is composed of four sealing elements 5. The sealing ring 1 may alternatively comprise more than four sealing elements 5.

Preferably, the sealing elements 5 are identical and the elastic elements 4 are also identical. Advantageously, the sealing ring 1 of the present invention may be also obtained by producing a single piece several times and also, during fabrication, by handling individual sealing elements 5 that are smaller than the assembled sealing ring 1.

## Claims

1. A sealing ring (1), comprising:
- an annular body (2) having a circumferential profile (3);
- elastic members (4), peripherally coupled to the annular body (2) and configured to counteract an expansion or a contraction of the annular body (2) in a radial direction; wherein- the annular body (2) comprises two or more sealing elements (5) extending along circumferential sections, each sealing element (5) extending between two opposite ends (51, 52), the sealing elements (5) being adjacent to each other to thereby define the circumferential profile (3) of the annular body (2), each sealing element (5) partially overlapping the sealing element (5) adjacent thereto,
- each sealing element (5) has an inner surface (11), the inner surfaces (11) of the sealing elements (5) that make up the annular body (2) define an inner circumferential profile of the annular body (2),
- each sealing element (5) has an outer surface (12), the outer surfaces (12) of the sealing elements (5) define an outer circumferential profile of the annular body (2),
- each sealing element (5) has two opposite lateral surfaces (13), connecting the inner surface (11) and the outer surface (12),
**characterized in that**
- the elastic members (4) comprise a pair of springs (41) for each sealing element (5), the springs (41) being located on two opposite lateral surfaces (13) of the sealing elements (5) of the annular body (2) so that each pair of ends (51, 52) of two adjacent sealing elements (5) comprises two springs (41), thereby each sealing element (5) shares two springs (41) with each adjacent sealing element (5).

2. A sealing ring (1) as claimed in claim 1, wherein each sealing element (5) extends between said two opposite ends (51, 52), each sealing element (5) partially overlapping the sealing element (5) adjacent thereto in correspondence of at least one end (51, 52).

3. A sealing ring (1) as claimed in claim 2, wherein each sealing element (5) contacts the sealing element (5) adjacent thereto in correspondence of at least one end (51, 52).

4. A sealing ring (1) as claimed in claim 2 or 3, wherein each elastic member (4) bridges two ends (51, 52) of two adjacent sealing elements (5) to constrain two adjacent sealing elements (5), each elastic member (4) being attached to each of the two adjacent sealing elements (5) by means of fasteners (6).

5. A sealing ring (1) as claimed in any of claims 2 to 4, wherein the overlapping ends (51, 52) of two adjacent sealing elements (5) have complementary shapes.

6. A sealing ring (1) as claimed in claim 5, wherein each end (51, 52) of each sealing element (5) comprises a projecting portion (7) extending in circumferential direction, the projecting portion (7) of each sealing element (5) being configured to form a coupling with the projecting portion (7) of the sealing element (5) adjacent thereto.

7. A sealing ring (1) as claimed in claim 5, wherein each sealing element (5) comprises a projecting portion (7) at one end (51) and a recess (8) at the opposite end (52), the projecting portion (7) and the recess (8) extending in circumferential direction, the projecting portion (7) of each sealing element (5) being configured to form a male-female coupling with the recess (8) of the sealing element (5) adjacent thereto.

8. A sealing ring (1) as claimed in any of claims 2 to 7, wherein each sealing element (5) is configured to slide in circumferential direction relative to the sealing element (5) adjacent thereto, at the respective end (51, 52), thereby causing the annular body (2) to expand or contract in radial direction, each end (51, 52) having a sliding surface (9) which extends in circumferential direction, the respective sliding surfaces (9) of two adjacent sealing elements (5) facing and contacting each other.

9. A sealing ring (1) as claimed in any of claims 1 to 8, wherein each end (51, 52) comprises two grooves (10), the respective grooves (10) of two adjacent sealing elements (5) being configured to accommodate a respective portion of an elastic member (4).

10. A compressor (20) comprising:
- a suction zone (21),
- a delivery zone (22),
- a seat (23) interposed between the suction zone (21) and the delivery zone (22),
- a sealing ring (1) arranged in said seat (23) to form a gas seal between the suction zone (21) and the delivery zone (22),
**characterized in that** said sealing ring (1) is as claimed in any of claims 1 to 9.

11. A compressor (20) as claimed in claim 10, wherein:
- the compressor is configured to operate with a pressure difference between the suction zone (21) and the delivery zone (22) ranging from 50 bar to 70 bar and with a temperature difference between the suction zone (21) and the delivery zone (22) ranging from 100°C to 150°C, with a minimum temperature Tmin and a maximum temperature Tmax,
- each spring (41) is pretensioned in a rest state and is configured to remain in its pretensioned state at the maximum temperature Tmax and not to yield at the minimum temperature Tmin.

12. A compressor (20) as claimed in claim 11, wherein the sealing elements (5) are configured to circumferentially expand at the maximum temperature Tmax thereby by reducing the distance between the ends (51, 52) of two adjacent sealing elements (5); the sealing elements (5) being configured to circumferentially retract at the minimum temperature Tmin thereby increasing the distance between the ends (51, 52) of two adjacent sealing elements (5).

13. A compressor (20) as claimed in any of claims 10 to 12, wherein the seat (23) has an inside diameter ranging from 0.5 to 5 m.

## Patentansprüche

1. Dichtungsring (1), umfassend:
- einen ringförmigen Körper (2) aufweisend einen Umfangsprofil (3);
- elastische Elemente (4), die in Umfangsrichtung mit dem ringförmigen Körper (2) gekoppelt sind und ausgebildet sind, um eine Ausdehnung oder eine Verengung des ringförmigen Körpers (2) in radialer Richtung entgegenzuwirken; wobei- der ringförmige Körper (2) zwei oder mehr Dichtungselemente (5) umfasst, die sich entlang Umfangsabschnitten erstrecken, wobei sich jedes Dichtungselement (5) zwischen zwei gegenüberliegenden Enden (51, 52) erstreckt, wobei die Dichtungselemente (5) aneinander angrenzen, um dadurch das Umfangsprofil (3) des ringförmigen Körpers (2) zu definieren, wobei jedes Dichtungselement (5) das daran angrenzende Dichtungselement (5) teilweise überlappt,
- jedes Dichtungselement (5) eine Innenfläche (11) aufweist, wobei die Innenflächen (11) der den Ringkörper (2) bildenden Dichtungselemente (5) ein inneres Umfangsprofil des Ringkörpers (2) definieren,
- jedes Dichtungselement (5) eine Außenfläche (12) aufweist, wobei die Außenflächen (12) der Dichtungselemente (5) ein äußeres Umfangsprofil des ringförmigen Körpers (2) definieren,
- jedes Dichtelement (5) zwei gegenüberliegende Seitenflächen (13) aufweist, die die Innenfläche (11) und die Außenfläche (12) verbinden,
**dadurch gekennzeichnet, dass**
- die elastischen Elemente (4) ein Paar Federn (41) für jedes Dichtungselement (5) umfassen, wobei die Federn (41) auf zwei gegenüberliegenden Seitenflächen (13) der Dichtungselemente (5) des ringförmigen Körpers (2) angeordnet sind, so dass jedes Paar von Enden (51, 52) von zwei angrenzenden Dichtungselementen (5) zwei Federn (41) umfasst, wodurch jedes Dichtungselement (5) zwei Federn (41) mit jedem angrenzenden Dichtungselement (5) teilt.

2. Dichtungsring **(1)** nach Anspruch **1,** wobei sich jedes Dichtungselement (5) zwischen den beiden gegenüberliegenden Enden (51, 52) erstreckt, wobei jedes Dichtungselement (5) das daran angrenzende Dichtungselement (5) in Übereinstimmung an mindestens einem Ende (51, 52) teilweise überlappt.

3. Dichtungsring **(1)** nach Anspruch 2, wobei jedes Dichtungselement (5) das daran angrenzende Dichtungselement (5) an mindestens einem Ende (51, 52) berührt.

4. Dichtungsring **(1)** nach Anspruch 2 oder 3, wobei jedes elastische Element (4) zwei Enden (51, 52) von zwei angrenzenden Dichtungselementen (5) überbrückt, um zwei benachbarte Dichtungselemente (5) einzuspannen, wobei jedes elastische Element (4) an jedem der zwei angrenzenden Dichtungselemente (5) mittels Befestigungselementen (6) befestigt ist.

5. Dichtungsring **(1)** nach einem der Ansprüche 2 bis 4, wobei die überlappenden Enden (51, 52) zweier angrenzenden Dichtungselemente (5) komplementäre Formen aufweisen.

6. Dichtungsring **(1)** nach Anspruch 5, wobei jedes Ende (51, 52) jedes Dichtungselements (5) einen vorstehenden Abschnitt (7) aufweist, der sich in Umfangsrichtung erstreckt, wobei der vorstehende Abschnitt (7) jedes Dichtungselements (5) so ausgebildet ist, dass er eine Kupplung mit dem vorstehenden Abschnitt (7) des daran angrenzenden Dichtungselements (5) bildet.

7. Dichtungsring **(1)** nach Anspruch 5, wobei jedes Dichtungselement (5) einen vorstehenden Abschnitt (7) an einem Ende (51) und eine Aussparung (8) an dem gegenüberliegenden Ende (52) aufweist, wobei sich der vorstehende Abschnitt (7) und die Aussparung (8) in Umfangsrichtung erstrecken, wobei der vorstehende Abschnitt (7) jedes Dichtungselements (5) so ausgebildet ist, dass er mit der Aussparung (8) des daran angrenzenden Dichtungselements (5) eine männliche-weibliche Kupplung bildet.

8. Dichtungsring **(1)** nach einem der Ansprüche 2 bis 7, wobei jedes Dichtungselement (5) so ausgebildet ist, dass es in Umfangsrichtung relativ zu dem daran angrenzenden Dichtungselement (5) an dem jeweiligen Ende (51, 52) gleitet, wodurch der ringförmige Körper (2) veranlasst wird, sich in radialer Richtung auszudehnen oder zu verengen, wobei jedes Ende (51, 52) eine Gleitfläche (9) aufweist, die sich in Umfangsrichtung erstreckt, wobei die jeweiligen Gleitflächen (9) von zwei angrenzenden Dichtungselementen (5) einander zugewandt sind und einander berühren.

9. Dichtungsring **(1)** nach einem der Ansprüche 1 bis 8, wobei jedes Ende (51, 52) zwei Nuten (10) umfasst, wobei die jeweiligen Nuten (10) von zwei angrenzenden Dichtungselementen (5) so ausgebildet sind, dass sie einen jeweiligen Abschnitt eines elastischen Elements (4) aufnehmen.

10. Kompressor (20), umfassend:
- eine Saugzone (21),
- eine Abgabezone (22),
- einen Sitz (23), der zwischen der Saugzone (21) und der Abgabezone (22) angeordnet ist,
- einen Dichtungsring **(1),** der in dem Sitz (23) angeordnet ist, um eine Gasdichtung zwischen der Saugzone (21) und der Abgabezone (22) zu bilden, **dadurch gekennzeichnet, dass** der Dichtungsring **(1)** nach einem der Ansprüche 1 bis 9 ist.

11. Kompressor (20) nach Anspruch 10, wobei:
- der Kompressor so ausgebildet ist, dass er mit einer Druckdifferenz zwischen der Saugzone (21) und der Abgabezone (22) von 50 bar bis 70 bar und mit einer Temperaturdifferenz zwischen der Saugzone (21) und der Abgabezone (22) von 100°C bis 150°C, mit einer Mindesttemperatur Tmin und einer Höchsttemperatur Tmax arbeitet,
- jede Feder (41) in einem Ruhezustand vorgespannt ist und so ausgebildet ist, dass sie bei der Höchsttemperatur Tmax in ihrem vorgespannten Zustand bleibt und bei der Mindesttemperatur Tmin nicht nachgibt.

12. Kompressor (20) nach Anspruch 11, wobei die Dichtungselemente (5) so ausgebildet sind, dass sie sich bei der Höchsttemperatur Tmax in Umfangsrichtung ausdehnen, wodurch der Abstand zwischen den Enden (51, 52) zweier angrenzenden Dichtungselemente (5) verringert wird; wobei die Dichtungselemente (5) so ausgebildet sind, dass sie sich bei der Mindesttemperatur Tmin in Umfangsrichtung verengen, wodurch der Abstand zwischen den Enden (51, 52) zweier angrenzenden Dichtungselemente (5) vergrößert wird.

13. Kompressor (20) nach einem der Ansprüche 10 bis 12, wobei der Sitz (23) einen Innendurchmesser von 0,5 bis 5 m aufweist.

## Revendications

1. Bague d'étanchéité (1), comprenant :
- un corps annulaire (2) ayant un profil circonférentiel (3) ;
- des organes élastiques (4), couplés en périphérie au corps annulaire (2) et configurés pour contrer une expansion ou une contraction du corps annulaire (2) dans une direction radiale ; dans laquelle le corps annulaire (2) comprend deux ou plusieurs éléments d'étanchéité (5) s'étendant le long de sections circonférentielles, chaque élément d'étanchéité (5) s'étendant entre deux extrémités opposées (51, 52), les éléments d'étanchéité (5) étant adjacents les uns aux autres pour définir ainsi le profil circonférentiel (3) du corps annulaire (2), chaque élément d'étanchéité (5) chevauchant partiellement l'élément d'étanchéité (5) qui lui est adjacent,
- chaque élément d'étanchéité (5) a une surface intérieure (11), les surfaces intérieures (11) des éléments d'étanchéité (5) qui composent le corps annulaire (2) définissent un profil circonférentiel intérieur du corps annulaire (2),
- chaque élément d'étanchéité (5) a une surface extérieure (12), les surfaces extérieures (12) des éléments d'étanchéité (5) définissent un profil circonférentiel extérieur du corps annulaire (2),
- chaque élément d'étanchéité (5) a deux surfaces latérales opposées (13), reliant la surface intérieure (11) et la surface extérieure (12),
**caractérisée en ce que**
- les organes élastiques (4) comprennent une paire de ressorts (41) pour chaque élément d'étanchéité (5), les ressorts (41) étant situés sur deux surfaces latérales opposées (13) des éléments d'étanchéité (5) du corps annulaire (2) de sorte que chaque paire d'extrémités (51, 52) de deux éléments d'étanchéité adjacents (5) comprend deux ressorts (41), ainsi chaque élément d'étanchéité (5) partage deux ressorts (41) avec chaque élément d'étanchéité adjacent (5).

2. Bague d'étanchéité (1) telle que revendiquée dans la revendication 1, dans laquelle chaque élément d'étanchéité (5) s'étend entre lesdites deux extrémités opposées (51, 52), chaque élément d'étanchéité (5) chevauchant partiellement l'élément d'étanchéité (5) qui lui est adjacent en correspondance d'au moins une extrémité (51, 52).

3. Bague d'étanchéité (1) telle que revendiquée dans la revendication 2, dans laquelle chaque élément d'étanchéité (5) entre en contact avec l'élément d'étanchéité (5) qui lui est adjacent en correspondance d'au moins une extrémité (51, 52).

4. Bague d'étanchéité (1) telle que revendiquée dans la revendication 2 ou 3, dans laquelle chaque organe élastique (4) relie deux extrémités (51, 52) de deux éléments d'étanchéité adjacents (5) pour contraindre deux éléments d'étanchéité adjacents (5), chaque organe élastique (4) étant fixé à chacun des deux éléments d'étanchéité adjacents (5) au moyen d'éléments de fixation (6).

5. Bague d'étanchéité (1) telle que revendiquée dans l'une quelconque des revendications 2 à 4, dans laquelle les extrémités (51, 52) qui se chevauchent de deux éléments d'étanchéité adjacents (5) ont des formes complémentaires.

6. Bague d'étanchéité (1) telle que revendiquée dans la revendication 5, dans laquelle chaque extrémité (51, 52) de chaque élément d'étanchéité (5) comprend une partie saillante (7) s'étendant dans une direction circonférentielle, la partie saillante (7) de chaque élément d'étanchéité (5) étant configurée pour former un couplage avec la partie saillante (7) de l'élément d'étanchéité (5) qui lui est adjacent.

7. Bague d'étanchéité (1) telle que revendiquée dans la revendication 5, dans laquelle chaque élément d'étanchéité (5) comprend une partie saillante (7) à une extrémité (51) et un renfoncement (8) à l'extrémité opposée (52), la partie saillante (7) et le renfoncement (8) s'étendant dans une direction circonférentielle, la partie saillante (7) de chaque élément d'étanchéité (5) étant configurée pour former un couplage mâle-femelle avec le renfoncement (8) de l'élément d'étanchéité (5) qui lui est adjacent.

8. Bague d'étanchéité (1) telle que revendiquée dans l'une quelconque des revendications 2 à 7, dans laquelle chaque élément d'étanchéité (5) est configuré pour glisser dans une direction circonférentielle par rapport à l'élément d'étanchéité (5) qui lui est adjacent, à l'extrémité respective (51, 52), faisant ainsi en sorte que le corps annulaire (2) s'expande ou se contracte dans une direction radiale, chaque extrémité (51, 52) ayant une surface de glissement (9) qui s'étend dans une direction circonférentielle, les surfaces de glissement respectives (9) de deux éléments d'étanchéité adjacents (5) se faisant face et entrant en contact l'une avec l'autre.

9. Bague d'étanchéité (1) telle que revendiquée dans l'une quelconque des revendications 1 à 8, dans laquelle chaque extrémité (51, 52) comprend deux rainures (10), les rainures respectives (10) de deux éléments d'étanchéité adjacents (5) étant configurées pour accueillir une partie respective d'un organe élastique (4).

10. Compresseur (20) comprenant :
- une zone d'aspiration (21),
- une zone de refoulement (22),
- un siège (23) interposé entre la zone d'aspiration (21) et la zone de refoulement (22),
- une bague d'étanchéité (1) disposée dans ledit siège (23) pour former une étanchéité au gaz entre la zone d'aspiration (21) et la zone de refoulement (22), **caractérisé en ce que** ladite bague d'étanchéité (1) est telle que revendiquée dans l'une quelconque des revendications 1 à 9.

11. Compresseur (20) tel que revendiqué dans la revendication 10, dans lequel :
- le compresseur est configuré pour fonctionner avec une différence de pression entre la zone d'aspiration (21) et la zone de refoulement (22) comprise entre 50 bars et 70 bars et avec une différence de température entre la zone d'aspiration (21) et la zone de refoulement (22) comprise entre 100 °C et 150 °C, avec une température minimale Tmin et une température maximale Tmax,
- chaque ressort (41) est précontraint à l'état de repos et est configuré pour rester dans son état précontraint à la température maximale Tmax et ne pas céder à la température minimale Tmin.

12. Compresseur (20) tel que revendiqué dans la revendication 11, dans lequel les éléments d'étanchéité (5) sont configurés pour s'expandre circonférentiellement à la température maximale Tmax en réduisant ainsi la distance entre les extrémités (51, 52) de deux éléments d'étanchéité adjacents (5) ; les éléments d'étanchéité (5) étant configurés pour se rétracter circonférentiellement à la température minimale Tmin en augmentant ainsi la distance entre les extrémités (51, 52) de deux éléments d'étanchéité adjacents (5).

13. Compresseur (20) tel que revendiqué dans l'une quelconque des revendications 10 à 12, dans lequel le siège (23) a un diamètre intérieur compris entre 0,5 et 5 m.
